# EUROPEAN PATENT APPLICATION

(11) **EP 2 634 208 A1**
(43) Date of publication of application: **04.09.2013**
(21) Application number: 12157243.2
(22) Date of filing: 28.02.2012
(51) Int. Cl.: C08J 5/18, C08L 69/00, C09D 133/06

(54) **Process for the production of low stress and optical quality film for use in opto-electronic devices**

(71) Applicant: Bayer MaterialScience AG, 51373 Leverkusen (DE); Bayer South East Asia Pte. Ltd., Singapur 118535 (SG)
(72) Inventor: Schmidt, Axel M., Dr., 50933 Köln (DE); Keong, Raymond Phoon Hon, 04-20 Singapore 289895 (SG); Scheibner, Daniel, 50226 Frechen (DE); Wang, Zheng, 11-192, Singapore (SG)
(74) Representative: Colling-Hendelkens, Miriam

(57) **Abstract**

The present invention relates to a film with a low optical retardation and thus low stress birefringence which contains at least one layer containing at least one polycarbonate or co-polycarbonate and which, on account of its optical properties, is suitable for use in opto-electronic devices, e.g. in displays and touch panels, as well as to a process for the production of such films and to the use thereof.

## Description

The present invention relates to a film with a low optical retardation and thus low stress birefringence. The film contains at least one layer containing at least one polycarbonate or co-polycarbonate and which, on account of its optical properties, is suitable for use in opto-electronic devices, e.g. displays and touch panels, as well as to a process for the production of such films and to the use thereof.

For the use of plastics films in displays and touch panels, outstanding optical properties are required in order to avoid impairing the functionality of the displays and touch panels. On the one hand, high demands are made for the total transmittance, clarity and transmission haze of the required films. On the other hand, low optical retardation and thus low stress birefringence of the plastics films is also of particular interest in display devices. Liquid crystal displays for instance are using polarized light to create images, while OLED displays use polarization filters to improve the readability of the display under ambient light. In birefringent material light has different propagation speeds depending on the orientation of its polarization. This phenomenon is expressed as optical retardation. As one result, the orientation of the polarization will be changed, depending on the degree of birefringence. In displays, such as LCDs or OLEDs it is crucial to control the degree of optical retardation precisely, as any undesired birefringence would result in undesired brightness deviations. Therefore, the use of material with tailored or low birefringence is preferred.

The degree of optical retardation of conventional films depends on the material that is being used and the way the film is being manufactured. Materials, such as polyethylene terephthalate (PET) and polyethyelene naphthalate (PEN), comprise a high optical retardation due to their nature of being semi-crystalline. In addition, such materials are typically bi-axially oriented in stretching the film in machine and transverse direction. This biaxial orientation results in a anisotropy of the material, which also increases the optical retardation, called stress birefringence. The overall level of optical retardation in such films is rather high and such films cannot be used inside a liquid crystal display stack.

Amorphous polymers, such as polycarbonates, have a lower optical retardation per se, due to the lag of crystalline domains. However, plastics films produced by means of melt cast extrusion often have the disadvantage of increased optical retardation and thus stress birefringence, in particular when a surface that is smooth and glossy on both sides is to be achieved directly in order to meet the demands of transparency and haze of the films for use in displays or touch panels.

Processes for the production of films with low optical retardation and thus stress birefringence by means of extrusion processes are likewise already known in principle to the person skilled in the art and are described in DE 39 11 218 A1. To produce the films by the process described in DE 39 11 218 A1 it is particularly preferred producing the film from the thermoplastic plastic by extrusion and subsequent calendering between a ground, lacquered elastic roller and a high-gloss steel roller, or by coating a film produced by extrusion and subsequent calendering between a ground elastic roller and a high-gloss steel roller with the melt of the same plastics material on the matted side of the film and again calendering it between a ground elastic roller and a high-gloss steel roller, the high-gloss side of the coated film facing the roller of elastic material. The process is described in detail in DE 39 11 218 A1. The process alternatives disclosed in DE 39 11 218 A1 are, however, both very complex and therefore disadvantageous. On the one hand, lacquering of the elastic rubber roller must be carried out, and such a lacquered roller is very sensitive. Replacement in order to renew the damaged lacquer, as is frequently necessary, leads to stoppages in production and, in addition, possibly to problems in ensuring consistent quality of the products. In the alternative process variants, on the other hand, a further extrusion step and additional calendering have to be carried out, which represents an extremely complex process and can, additionally, impair the optical qualities of the film. Therefore, the processes according to DE 39 11 218 A1 are not preferred for manufacturing films with excellent optical properties for display or touch panel applications.

An alternative is to cast the film from a polymer solution. For example, the solvent cast solution of polycarbonate films can be conducted in diluting a small portion of the polymer in huge amount of chlorinated solvents, such as methylene chloride, and pouring this solution onto a carrier films followed by physical drying. However, solvent cast manufacturing processes are typically more expensive than melt cast extruded films and are associated with occupational and environmental hazards. Moreover, there might be a problem of completely removing the solvent residues from the films. Such solvent residues remaining in the films can in turn have an adverse effect on the optical properties of the films and additionally on the function of displays or touch panels, in particular when such residues escape from the films during the period of operation of such devices.

Consequently, there was a continued need for plastics films which, on account of their optical properties, are suitable, for example, for use in displays or touch panels. In particular, there was a need for such films, which can be produced in a simple manner and additionally meet the requirements for good total transmittance, transmission haze, clarity and low optical retardation.

The object underlying the present invention was consequently to provide such a plastics film. An additional object was to find a suitable process for the production of such a plastics film.

The object has been achieved, surprisingly, by a coated film comprising a base film containing at least one layer comprising at least one poly- or copolycarbonate, characterised in that the base film has
- an optical retardation of less than 100 nm and
- a matt side having a surface roughness of from 200 nm to 20 µm and
- the other side having a surface roughness of less than 200 nm and
- a coating on the matt side whereby the surface of said coating has a surface roughness of less than 200 nm.

The surface roughness according to the present invention means the Ra value (average roughness) of the respective surfaces, such as the coating as well as the smooth or matt side of the basic film.

The surface roughness as Ra value (average roughness) of the coating as well as the smooth side of the basic film (having a surface roughness of less than 200 nm) can be measured according to DIN EN ISO 4287, e.g. with a Contour GT-KO optical surface-profiler.

The surface roughness as Ra value of the matt side of the basic film can be measured according to DIN EN ISO 4287, e.g. with a Contour GT-KO optical surface-profiler.

The matt side of the base film - which can also be referred to as the rough surface - preferably has a Ra value for surface roughness of from 200 nm to 10 µm, particularly preferably from 200 nm to 6 µm.

The other side of the base film is a smooth surface preferably having a surface roughness (Ra value) of less than 150 nm, more preferably of less than 100 nm, most preferably of less than 50 nm. Such smooth surfaces are also referred to as glossy surfaces.

The base film preferably has an optical retardation of less than 50 nm, particularly preferably of less than 10 nm.

Optical retardation according to this invention means the value for average optical retardation. Measurement of the average optical retardation can be carried out according to ASTM D4093-95 by using a polarimeter Ilis StrainMatic® of Ilis GmbH.

Preferably, in the coated film according to the invention, the difference of the refractive indices of the base film and the coating at a wavelength of 550 nm is less than 0.04, more preferably by 0.02, most preferably by 0.015.

The determination of the refractive indices of the coating or the basic film can be carried out, for example, using a Metricon 2010/M Prism Coupler.

The film according to the invention has low optical retardation and thus low stress birefringence, whereby an adverse effect on the polarisation of the light is avoided, and excellent total transmittance, clarity and transmission haze. In particular the use of poly- or co-polycarbonate as the plastics material has a positive effect, for example, on total transmittance, clarity and transmission haze as well as good chromaticity coordinates.Adverse effects caused by different refractive indices and the resulting refraction of the light passing through are thereby avoided. Surprisingly, under the comparable surface roughness of the coatings, coated films according to the invention having such a low difference between the refractive indices of the base film and the coating - also referred to as films with index-matched coating - show improved clarity compared to such films according to the invention not having such low difference between the refractive indices of the base film and the coating (films with non index-matched coating).

Preferably the coating contains nanoparticles, more preferably nanoparticles having a particle size d₅₀ of less than 200 nm, most particularly preferably of less than 100 nm, and in preferred embodiments of less than 50 nm. In most preferred embodiments, the nanoparticles are nanoparticles having a particle size of from 10 to 40 nm.

The particle size d₅₀ can be determined by means of dynamic light scattering using a Zetasizer Nano ZS90.

Both organic and inorganic nanoparticles are suitable as the nanoparticles. However, the nanoparticles are preferably inorganic nanoparticles, particularly preferably oxidic nanoparticles. Examples of suitable nanoparticles for use in the coating of the film according to the invention are optionally doped tin oxide, zirconium oxide, antimony oxide, titanium oxide, cerium oxide, yttrium oxide and alumina oxide. In preferred embodiments of the invention, particles of zinc doped tin oxide, fluorine doped tin oxide, aluminium doped zinc oxide, gallium doped zinc oxide, phosphorus-doped tin oxide, antimony doped tin oxide are used as the nanoparticles.

The nanoparticles are contained in the dry coating preferably in an amount of from 10 to 80 wt.%, particularly preferably in an amount of from 20 to 60 wt.%, based on the solid content of the coating composition.

The coating can be a radiation-cured coating or a coating based on polyurethane or epoxy resin. Radiation-cured coatings, in particular those based on acrylates, are preferred.

Radiation-cured coatings are preferably obtainable from coating compositions containing radiation-curable polymers and/or monomers.

Suitable radiation-crosslinkable polymers are in particular polymers that can be crosslinked by means of electromagnetic radiation, for example by means of UV rays, electron beams, X-rays or gamma rays, preferably by means of UV or electron beam radiation. Particular preference is given to polymers which carry ethylenically unsaturated groups which can be crosslinked by means of radiation. Such ethylenically unsaturated groups can be, for example, acrylate, methacrylate, vinyl ether, allyl ether and maleimide groups. Suitable ethylenically unsaturated polymers are, for example and preferably, (meth)acrylated poly(meth)acrylates, polyurethane (meth)acrylates, polyester (meth)acrylates, polyether (meth)acrylates, epoxy (meth)acrylates, (meth)acrylated oils and unsaturated polyesters (R. Schwalm, UV Coatings, 2007, Elsevier, p. 93-139). Particularly preferred ethylenically unsaturated polymers are (meth)acrylated poly(meth)acrylates or polyurethane (meth)acrylates. Suitable radiation-crosslinkable monomers are in particular monomers which can be crosslinked by means of electromagnetic radiation, for example by means of UV rays, electron beams, X-rays or gamma rays, preferably by means of UV or electron beam radiation. They are preferably unsaturated monomers. Unsaturated monomers can preferably be acrylates or methacrylates, preferably C₁-C₂₀-alkyl acrylates or C₁-C₂₀-alkyl methacrylates, vinyl aromatic compounds, preferably C₁-C₂₀-vinyl aromatic compounds, such as, for example, styrene, vinyltoluene, α-butylstyrene or 4-n-butylstyrene, vinyl esters of carboxylic acids, preferably vinyl esters of C₁-C₂₀-carboxylic acids, such as, for example, vinyl laurate, vinyl stearate, vinyl propionate and vinyl acetate, vinyl ethers, preferably vinyl ethers of C₁-C₂₀-alcohols, such as, for example, vinyl methyl ether, vinyl isobutyl ether, vinyl hexyl ether or vinyl octyl ether, unsaturated nitriles, such as, for example, acrylonitrile or methacrylonitrile, or an alkene having one or more double bonds, preferably one or two double bonds, preferably C₂-C₂₀-alkenes having one or more double bonds, preferably one or two double bonds, such as, for example, ethylene, propylene, isobutylene, butadiene or isoprene. The radiation-crosslinkable monomers are particularly preferably acrylates or methacrylates, preferably C₁-C₂₀-alkyl acrylates or C₁-C₂₀-alkyl methacrylates.

Suitable examples of such acrylates or methacrylates, preferably C₁-C₂₀-alkyl acrylates or C₁-C₂₀-alkyl methacrylates, are methyl acrylate, ethyl acrylate, n-butyl acrylate, isobutyl acrylate, tert-butyl acrylate, 2-ethyl-hexyl acrylate, isodecyl acrylate, n-lauryl acrylate, C₁₂-C₁₅-alkyl acrylates, n-stearyl acrylate, n-butoxyethyl acrylate, butoxy diethylene glycol acrylate, methoxy triethylene glycol acrylate, cyclohexyl acrylate, tetrahydrofurfuryl acrylate, benzyl acrylate, 2-phenoxyethyl acrylate, isobornyl acrylate, 2-hydroxyethyl acrylate, 2-hydroxypropyl acrylate, 2-hydroxyethyl acrylate, 2-hydroxybutyl acrylate, 2-hydroxybutyl acrylate, methanediol diacrylate, glycerol diacrylate, neopentyl glycol diacrylate, 2-butyl-2-ethyl-1,3-propanediol diacrylate, trimethylolpropane diacrylate, pentaerythritol triacrylate, glycerol triacrylate, 1,2,4-butanetriol triacrylate, trimethylolpropane triacrylate, tricyclodecanedimethanol diacrylate, ditrimethylolpropane tetraacrylate, pentaerythritol tetraacrylate, dipentaerythritol tetraacrylate, dipentaerythritol pentaacrylate, dipentaerythritol hexaacrylate and the corresponding methacrylates. There are additionally suitable as acrylates and methacrylates the alkoxylated, preferably ethoxylated, acrylates and methacrylates mentioned above.

The coating composition used to coat the base film preferably contains at least one suitable photoinitiator. The photoinitiator can also be covalently bonded to the crosslinkable polymer. The radiation chemically-induced polymerisation is preferably carried out by means of radiation having a wavelength of from 400 nm to 1 pm, such as, for example, UV rays, electron beams, X-rays or gamma rays.

When using UV radiation, curing is initiated in the presence of photoinitiators. With the photoinitiators, a distinction is made in principle between two types, the unimolecular type (I) and the bimolecular type (II). Suitable type (I) systems are aromatic ketone compounds, such as, for example, benzophenones in combination with tertiary amines, alkylbenzophenones, 4,4'-bis(dimethylamino)-benzophenone (Michler's ketone), anthrone and halogenated benzophenones, or mixtures of the mentioned types. Also suitable are type (II) initiators, such as benzoin and its derivatives, benzil ketals, acylphosphine oxides, 2,4,6-trimethyl-benzoyl-diphenylphosphine oxide, bisacylphosphine oxides, phenylglyoxylic acid esters, camphorquinone, α-aminoalkylphenones, α,α-dialkoxyacetophenones and α-hydroxyalkylphenones. Photoinitiators which can readily be incorporated into the aqueous dispersions are preferred. Such products are, for example, Irgacure® 500 (a mixture of benzophenone and (1-hydroxycyclohexyl)phenyl ketone, BASF SE, Ludwigshafen, DE), Irgacure® 819 DW (phenylbis-(2,4,6-trimethylbenzoyl)-phosphine oxide, BASF SE, Ludwigshafen, DE), Esacure® KIP EM (oligo-[2-hydroxy-2-methyl-1-[4-(1-methylvinyl)-phenyl]-propanone], Lamberti, Aldizzate, Italy). It is also possible to use mixtures of these compounds.

The surface of the coating has a roughness of less than 200 nm, preferably less than 150 nm, more preferably less than 100 nm, most preferably of less than 50 nm.

This surface is likewise a smooth surface. The roughness of the matt surface of the base film is outstandingly evened out by the coating, so that the coated film according to the invention has a smooth surface on both sides.

The base film contains at least one layer containing at least one polycarbonate or co-polycarbonate - also referred to as poly- or co-polycarbonate. The base film can be a one-layer or multi-layer film. In the case of a multi-layer film, one layer or more than one layer can contain at least one poly- or co-polycarbonate. The film is preferably a one-layer film.

The layer(s) containing at least one poly- or co-polycarbonate can contain one or more poly- or co-polycarbonate(s) but can also contain further plastics in addition to the poly- or co-polycarbonate(s). Preferably, however, the layer(s) containing at least one poly- or co-polycarbonate contain(s) more than 50 wt.%, particularly preferably more than 70 wt.%, most particularly preferably more than 80 wt.%, poly- or co-polycarbonate(s) as plastic(s). In particularly preferred embodiments, the layer(s) containing at least one poly- or co-polycarbonate consist(s) substantially of one or more poly- or co-polycarbonates and additionally contain(s) optionally small amounts, preferably less than 5 wt.%, particularly preferably less than 1 wt.%, additives, based on the total weight of the plastics composition.

Aromatic polycarbonates or co-polycarbonates are preferably suitable as the poly- or co-polycarbonates.

The polycarbonates or co-polycarbonates can be linear or branched in known manner.

The preparation of these polycarbonates or co-polycarbonates can be carried out in known manner according to interfacial polycondensation or melt polycondensation from diphenols, carbonic acid derivatives, optionally chain terminators and optionally branching agents. Details of the preparation of such polycarbonates or co-polycarbonates have been recorded in many patent specifications for about 40 years. Reference may be made here by way of example only to Schnell, "Chemistry and Physics of Polycarbonates", Polymer Reviews, Volume 9, Interscience Publishers, New York, London, Sydney 1964.

Suitable diphenols can be, for example, dihydroxyaryl compounds of the general formula (I)

HO-Z-OH (I)

wherein Z is an aromatic radical having from 6 to 34 carbon atoms which can contain one or more optionally substituted aromatic nuclei and aliphatic or cycloaliphatic radicals or alkylaryls or heteroatoms as bridge members.

Examples of suitable dihydroxyaryl compounds are: dihydroxybenzenes, dihydroxydiphenyls, bis-(hydroxyphenyl)-alkanes, bis-(hydroxyphenyl)-cycloalkanes, bis-(hydroxyphenyl)-aryls, bis-(hydroxyphenyl) ethers, bis-(hydroxyphenyl) ketones, bis-(hydroxyphenyl) sulfides, bis-(hydroxyphenyl)-sulfones, bis-(hydroxyphenyl) sulfoxides, 1,1'-bis-(hydroxyphenyl)-diisopropylbenzenes, and the compounds thereof alkylated and halogenated on the ring.

These and further suitable other dihydroxyaryl compounds are described, for example, in DE-A 3 832 396, FR-A 1 561 518, in H. Schnell, Chemistry and Physics of Polycarbonates, Interscience Publishers, New York 1964, p. 28 ff; p.102 ff and in D.G. Legrand, J.T. Bendler, Handbook of Polycarbonate Science and Technology, Marcel Dekker New York 2000, p. 72 ff.

Preferred dihydroxyaryl compounds are, for example, resorcinol, 4,4'-dihydroxydiphenyl, bis-(4-hydroxyphenyl)-m ethane, bis-(3,5-dimethyl-4-hydroxyphenyl)-methane, bis-(4-hydroxyphenyl)-diphenyl-methane, 1,1-bis-(4-hydroxyphenyl)-1-phenyl-ethane, 1,1-bis-(4-hydroxyphenyl)-1-(1-naphthyl)-e th an e , 1,1-bis-(4-hydroxyphenyl)-1-(2-naphthyl)-ethane, 2,2-bis-(4-hydroxyphenyl)-propane, 2,2-bis-(3-methyl-4-hydroxyphenyl)-propane, 2,2-bis-(3,5-dimethyl-4-hydroxyphenyl)-propane, 2,2-bis-(4-hydroxyphenyl)-1-phenyl-propane, 2,2-bis-(4-hydroxyphenyl)-hexafluoropropane, 2,4-bis-(4-hydroxyphenyl)-2-methyl-butane, 2,4-bis-(3,5-dimethyl-4-hydroxyphenyl)-2-methylbutane, 1,1-bis-(4-hydroxyphenyl)-cyclohexane, 1,1-bis-(3,5-dimethyl-4-hydroxyphenyl)-cyclohexane, 1,1-bis-(4-hydroxyphenyl)-4-methyl-cyclohexane, 1,3-bis-[2-(4-hydroxyphenyl)-2-propyl]-benzene, 1,1 '-bis-(4-hydroxyphenyl)-3-diisopropyl-benzene, 1,1 '-bis-(4-hydroxyphenyl)-4-diisopropyl-benzene, 1,3-bis-[2-(3,5-dimethyl-4-hydroxyphenyl)-2-propyl]-benzene, bis-(4-hydroxyphenyl) ether, bis-(4-hydroxyphenyl) sulfide, bis-(4-hydroxyphenyl)-sulfone, bis-(3,5-dimethyl-4-hydroxyphenyl)-sulfone and 2,2',3,3'-tetrahydro-3,3,3',3'-tetramethyl-1,1'-spirobi-[1H-indene]-5,5'-diol or
dihydroxydiphenylcycloalkanes of formula (Ia) 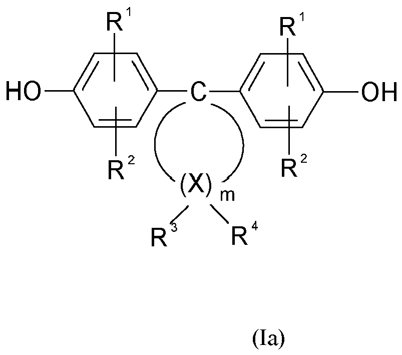 wherein
- R¹ and R²: independently of one another represent hydrogen, halogen, preferably chlorine or bromine, C₁-C₈-alkyl, C₅-C₆-cycloalkyl, C₆-C₁₀-aryl, preferably phenyl, and C₇-C₁₂-aralkyl, preferably phenyl-C₁-C₄-alkyl, in particular benzyl,
- m: represents an integer from 4 to 7, preferably 4 or 5,
- R³ and R⁴,: which can be chosen individually for each X, independently of one another represent hydrogen or C₁-C₆-alkyl and
- X: represents carbon,
with the proviso that, on at least one atom X, R³ and R⁴ simultaneously represent alkyl. In formula (Ia), R³ and R⁴ are preferably simultaneously alkyl on one or two atom(s) X, in particular on only one atom X.

The preferred alkyl radical for the radicals R³ and R⁴ in formula (Ia) is methyl. The X atoms in the alpha-position relative to the diphenyl-substituted carbon atom (C-1) are preferably not dialkyl-substituted; alkyl disubstitution in the beta-position relative to C-1 is preferred, however.

Particularly preferred dihydroxydiphenylcycloalkanes of formula (Ia) are those having 5 and 6 ring carbon atoms X in the cycloaliphatic radical (m = 4 or 5 in formula (Ia)), for example the diphenols of formulae (Ia-1) to (Ia-3)

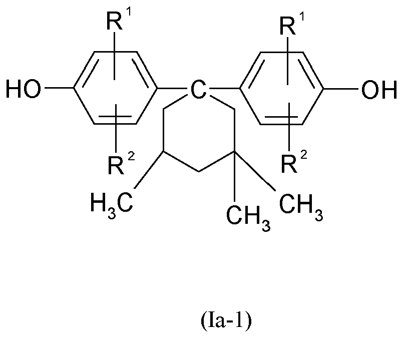

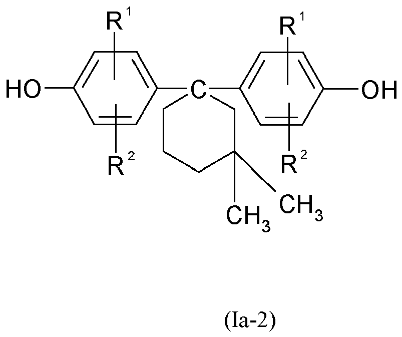

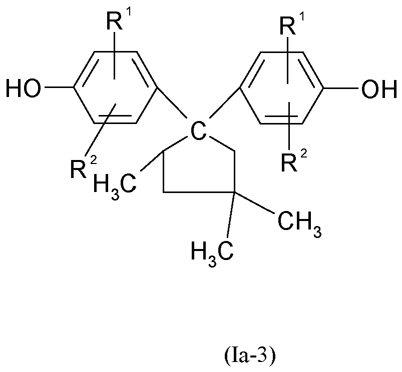

A most particularly preferred dihydroxydiphenylcycloalkane of formula (Ia) is 1,1-bis-(4-hydroxyphenyl)-3,3,5-trimethyl-cyclohexane (formula (Ia-1) wherein R¹ and R² are H).

Such polycarbonates or co-polycarbonates can be prepared from dihydroxydiphenylcycloalkanes of formula (Ia) according to EP-A 359 953.

Particularly preferred dihydroxyaryl compounds are resorcinol, 4,4'-dihydroxydiphenyl, bis-(4-hydroxyphenyl)-diphenyl-methane, 1,1-bis-(4-hydroxyphenyl)-1-phenyl-ethane, bis-(4-hydroxyphenyl)-1-(1-naphthyl)-ethane, bis-(4-hydroxyphenyl)-1-(2-naphthyl)-ethane, 2,2-bis-(4-hydroxyphenyl)-propane, 2,2-bis(3,5-dimethyl-4-hydroxyphenyl)-propane, 1,1-bis-(4-hydroxyphenyl)-cyclohexane, 1,1-bis-(3,5-dimethyl-4-hydroxyphenyl)-cyclohexane, 1,1-bis-(4-hydroxyphenyl)-3,3,5-trimethyl-cyclohexane, 1,1'-bis-(4-hydroxyphenyl)-3-diisopropyl-benzene and 1,1'-bis-(4-hydroxyphenyl)-4-diisopropyl-benzene.

Most particularly preferred dihydroxyaryl compounds are 4,4'-dihydroxydiphenyl, 2,2-bis-(4-hydroxyphenyl)-propane and 1,1-bis-(4-hydroxyphenyl)-3,3,5-trimethyl-cyclohexane.

It is possible to use both one dihydroxyaryl compound, with the formation of homo-polycarbonates (polycarbonates), and various dihydroxyaryl compounds, with the formation of co-polycarbonates. It is possible to use both one dihydroxyaryl compound of formula (I) or (Ia), with the formation of homo-polycarbonates, and a plurality of dihydroxyaryl compounds of formula (I) and/or (Ia), with the formation of co-polycarbonates. The various dihydroxyaryl compounds can be linked together both randomly and block-wise. In the case of co-polycarbonates of dihydroxyaryl compounds of formula (I) and (Ia), the molar ratio of dihydroxyaryl compounds of formula (Ia) to the other dihydroxyaryl compounds of formula (I) which are optionally to be used is preferably between 99 mol% of (Ia) to 1 mol% of (I) and 2 mol% of (Ia) to 98 mol% of (I), preferably between 99 mol% of (Ia) to 1 mol% of (I) and 10 mol% of (Ia) to 90 mol% of (I), and in particular between 99 mol% of (Ia) to 1 mol% of (I) and 30 mol% of (Ia) to 70 mol% of (I).

Polycarbonates or co-polycarbonates prepared using the dihydroxyaryl compound of formula (Ia) usually have a higher glass transition temperature Tg than polypolycarbonate based on 2,2-bis-(4-hydroxyphenyl)-propane as the dihydroxyaryl compound.

Preferred polycarbonates or co-polycarbonates in the base film are those having a glass transition temperature Tg of equal to or more than 140°C, preferably of more than 175°C. The glass transition temperature Tg is determined by means of dynamic differential calorimetry (DSC) according to standard DIN EN 61006 at a heating rate of 10 K/min with the Tg being defined as the mid-point temperature (tangent method).

Preferred polycarbonates or co-polycarbonates in the base film are, therefore, those prepared using the dihydroxyaryl compound of formula (Ia), preferably of formulae (Ia-1), (Ia-2) and/or (Ia-3), optionally in combination with one or more other dihydroxyaryl compound(s). Particularly preferred polycarbonates or co-polycarbonates in the base film are those prepared using the dihydroxyaryl compound of formula (Ia), preferably of formulae (Ia-1), (Ia-2) and/or (Ia-3), in combination with one or more other dihydroxyaryl compound(s). A most particularly preferred copolycarbonate can be prepared using 1,1-bis-(4-hydroxyphenyl)-3,3,5-trimethyl-cyclohexane and 2,2-bis-(4-hydroxyphenyl)-propane as the dihydroxyaryl compounds of formulae (Ia) and (I).

Such polycarbonates or co-polycarbonates having an elevated glass transition temperature Tg additionally have the advantage that they withstand process temperatures of more than 150°C to 200°C without being damaged. This property permits the application of conductive structures, such as, for example, bus bars of silver, which must subsequently be subjected to a sintering process at temperatures of up to 200°C. Sintering at elevated temperature generally leads to markedly better properties of the conductive structures - such as, for example, higher conductivity - for which reason resistance of the plastics substrate provided with such structures is desirable and advantageous. The rejects in the production can be markedly reduced by the use of plastics films having high-temperature stability. Additionally, plastic films having high temperature resistance are also much sought after when it comes to ITO deposition whereby there is a post-annealing at temperature 150-180°C for crystallization of a-ITO to achieve higher conductivity. In addition, for dry etching process, plastic films with higher Tg is desired to withstand etching temperature of 130 to 200°C.

Suitable carbonic acid derivatives for the preparation of the poly- or co-polycarbonates can be - preferably for the interfacial polycondensation process - phosgene or - preferably for the melt condensation process - for example, diaryl carbonates of the general formula (II) 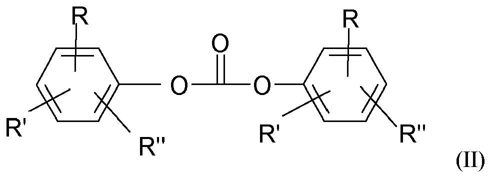 wherein
- R, R' and R",: which are the same or different, independently of one another represent hydrogen, linear or branched C₁-C₃₄-alkyl, C₇-C₃₄-alkylaryl or C₆-C₃₄-aryl, R can further also represent -COO-R", wherein R"' represents hydrogen, linear or branched C₁-C₃₄-alkyl, C₇-C₃₄-alkylaryl or C₆-C₃₄-aryl.

Preferred diaryl carbonates are, for example, diphenyl carbonate, methylphenyl-phenyl carbonate and di-(methylphenyl) carbonate, 4-ethylphenyl-phenyl carbonate, di-(4-ethylphenyl) carbonate, 4-n-propylphenyl-phenyl carbonate, di-(4-n-propylphenyl) carbonate, 4-isopropylphenyl-phenyl carbonate, di-(4-isopropylphenyl) carbonate, 4-n-butylphenyl-phenyl carbonate, di-(4-n-butylphenyl) carbonate, 4-isobutylphenyl-phenyl carbonate, di-(4-isobutylphenyl) carbonate, 4-tert-butylphenyl-phenyl carbonate, di-(4-tert-butylphenyl) carbonate, 4-n-pentylphenyl-phenyl carbonate, di-(4-n-pentylphenyl) carbonate, 4-n-hexylphenyl-phenyl carbonate, di-(4-n-hexylphenyl) carbonate, 4-isooctylphenyl-phenyl carbonate, di-(4-isooctylphenyl) carbonate, 4-n-nonylphenyl-phenyl carbonate, di-(4-n-nonylphenyl) carbonate, 4-cyclohexylphenyl-phenyl carbonate, di-(4-cyclohexylphenyl) carbonate, 4-(1-methyl-1-phenylethyl)-phenyl-phenyl carbonate, di-[4-(1-methyl-1-phenylethyl)-phenyl] carbonate, biphenyl-4-yl-phenyl carbonate, di-(biphenyl-4-yl) carbonate, 4-(1-naphthyl)-phenyl-phenyl carbonate, 4-(2-naphthyl)-phenyl-phenyl carbonate, di-[4-(1-naphthyl)-phenyl] carbonate, di-[4-(2-naphthyl)phenyl] carbonate, 4-phenoxyphenyl-phenyl carbonate, di-(4-phenoxyphenyl) carbonate, 3-pentadecylphenyl-phenyl carbonate, di-(3-pentadecylphenyl) carbonate, 4-tritylphenyl-phenyl carbonate, di-(4-tritylphenyl) carbonate, methylsalicylate-phenyl carbonate, di-(methylsalicylate) carbonate, ethylsalicylate-phenyl carbonate, di-(ethylsalicylate) carbonate, n-propylsalicylate-phenyl carbonate, di-(n-propylsalicylate) carbonate, isopropylsalicylate-phenyl carbonate, di-(isopropylsalicylate) carbonate, n-butylsalicylate-phenyl carbonate, di-(n-butylsalicylate) carbonate, isobutylsalicylate-phenyl carbonate, di-(iso-butylsalicylate) carbonate, tert-butylsalicylate-phenyl carbonate, di-(tert-butylsalicylate) carbonate, di-(phenylsalicylate) carbonate and di-(benzylsalicylate) carbonate.

Particularly preferred diaryl compounds are diphenyl carbonate, 4-tert-butylphenyl-phenyl carbonate, di-(4-tert-butylphenyl) carbonate, biphenyl-4-yl-phenyl carbonate, di-(biphenyl-4-yl) carbonate, 4-(1-methyl-1-phenylethyl)-phenyl-phenyl carbonate, di-[4-(1-methyl-1-phenylethyl)-phenyl] carbonate and di-(methylsalicylate) carbonate.

Diphenyl carbonate is most particularly preferred.

It is possible to use both one diaryl carbonate and various diaryl carbonates.

In order to control or modify the end groups, it is additionally possible to use as chain terminators, for example, one or more monohydroxyaryl compound(s) that have not been employed in the preparation of the diaryl carbonate(s) used. Such compounds can be those of the general formula (III) 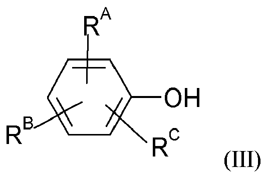 wherein
- R^{A}: represents linear or branched C₁-C₃₄-alkyl, C₇-C₃₄-alkylaryl, C₆-C₃₄-aryl or -COO-R^{D}, wherein R^{D} represents hydrogen, linear or branched C₁-C₃₄-alkyl, C₇-C₃₄-alkylaryl or C₆-C₃₄-aryl, and
- R^{B}, R^{C},: which are the same or different, independently of one another represent hydrogen, linear or branched C₁-C₃₄-alkyl, C₇-C₃₄-alkylaryl or C₆-C₃₄-aryl.

Such monohydroxyaryl compounds are, for example, 1-, 2- or 3-methylphenol, 2,4-dimethylphenol, 4-ethylphenol, 4-n-propylphenol, 4-isopropylphenol, 4-n-butylphenol, 4-isobutylphenol, 4-tert-butylphenol, 4-n-pentylphenol, 4-n-hexylphenol, 4-isooctylphenol, 4-n-nonylphenol, 3-pentadecylphenol, 4-cyclohexylphenol, 4-(1-methyl-1-phenylethyl)-phenol, 4-phenylphenol, 4-phenoxyphenol, 4-(1-naphthyl)-phenol, 4-(2-naphthyl)-phenol, 4-tritylphenol, methyl salicylate, ethyl salicylate, n-propyl salicylate, isopropyl salicylate, n-butyl salicylate, isobutyl salicylate, tert-butyl salicylate, phenyl salicylate and benzyl salicylate.

4-tert-Butylphenol, 4-isooctylphenol and 3-pentadecylphenol are preferred.

Suitable branching agents can be compounds having three or more functional groups, preferably those having three or more hydroxyl groups.

Suitable compounds having three or more phenolic hydroxyl groups are, for example, phloroglucinol, 4,6-dimethyl-2,4,6-tri-(4-hydroxyphenyl)-hept-2-e n e , 4 , 6-dimethyl-2,4,6-tri-(4-hydroxyphenyl)-heptane, 1,3,5-tri-(4-hydroxyphenyl)-benzene, 1,1,1-tri-(4-hydroxyphenyl)-ethane, tri-(4-hydroxyphenyl)-phenylmethane, 2,2-bis-(4,4-bis-(4-hydroxyphenyl)-cyclohexyl]-propane, 2,4-bis-(4-hydroxyphenyl-isopropyl)-phenol and tetra-(4-hydroxyphenyl)-methane.

Other suitable compounds having three or more functional groups are, for example, 2,4-dihydroxybenzoic acid, trimesic acid (trichloride), cyanuric acid trichloride and 3,3-bis-(3-methyl-4-hydroxyphenyl)-2-oxo-2,3-dihydroindole.

Preferred branching agents are 3,3-bis-(3-methyl-4-hydroxyphenyl)-2-oxo-2,3-dihydroindole and 1,1,1-tri-(4-hydroxyphenyl)-ethane.

The poly- or co-polycarbonates or the plastics compositions containing poly- or co-polycarbonates can additionally contain additives. Conventional additives for plastics compositions are known to the person skilled in the art.

The coated film according to the invention can also contain a coating on the other side of the base film already having a smooth surface. For such coating, the coating compositions which are used for the coating of the matt side are preferably used. Such coating on the smooth side of the base film can be advantageous, since the coating can also serve as a hard coat on the base film. Such a hard coat can protect the base film material from scratches or other damages which could adversely affect the optical properties of the coated film. Another advantage of coating on the matt side as well as the smooth side of the base film is that the coating provide chemical resistance on both sides of the coated film. The chemical resistance on both side of the coated film is required when etching is involved in the fabrication process of a device. Therefore, advantageously and preferably the base film comprises such a coating on the matt side as well as on the smooth side (having a surface roughness of less than 200 nm). In preferred embodiments for coating the matt and the smooth side of the base film, the same coating composition is used.

The coated film according to the invention preferably has a total thickness of from 20 to 1000 µm, particularly preferably from 25 to 500 µm, most particularly preferably from 25 to 250 µm.

The coated film according to the invention preferably has a total transmittance for light of wavelength from 380 nm to 800 nm of more than 85%, preferably of more than 88%.

The coated film according to the invention preferably has a transmission haze of less than 2%, preferably of less than 1%.A further advantage of the present invention is that the coated film according to the invention can be produced in a simple manner by producing the base film by means of an extrusion or co-extrusion process and then applying the coating.

The present invention therefore further provides a process for the production of the coated film according to the invention, characterised in that
- a base film having at least one layer containing at least one poly- or copoly-carbonate, the base film having an optical retardation of less than 100 nm, a matt side having a surface roughness of from 200 nm to 20 µm and another side having a surface roughness of less than 200 nm is produced by means of extrusion or co-extrusion by extruding or co-extruding the plastics melt and then calendering it between two rollers, of which one roller has a steel surface and the other roller has an elastic surface,
- the base film so produced is then coated on the matt side with a coating composition and the coating having a roughness of less than 200 nm after drying and optional additional curing.

Starting from the known processes according to DE 39 11 218 A1 there was a continued need for a process for the production of plastics films having good optical properties, *inter alia* also particularly low stress birefringence, and a smooth surface on both sides, which process avoids the disadvantages of DE 39 11 218 A1.

The process according to the invention offers significant advantages over the process described in DE 39 11 218 A1 which uses lacquered rollers or additional extrusion (lamination) steps. It is thereby possible to dispense with the lacquering of the elastic roller. In addition, the application of the coating, in particular the coating adapted to the base film in terms of the refractive index, opens up the possibility of producing films having outstanding optical properties and extremely low stress birefringence. A second extrusion step for the application of a further plastics layer is likewise not required.

There is preferably used as the roller having an elastic surface a roller having a rubber surface, preferably a surface of silicone rubber. This surface can preferably be ground.

There is preferably used as the roller having an steel surface a roller having a high gloss steel surface.

Calendering is carried out preferably in the temperature range from 150°C to 400°C, more preferably from 250 to 400°C, particularly preferably from 320°C to 360°C, and at pressures of from 50 to 200 bar, more preferably from 80 to 150 bar, particularly preferably from 70 to 120 bar.

The coating is then applied to the matt surface of the base film, dried and, where a radiation-curable coating composition is used, cured by means of radiation. The radiation curing, that is to say crosslinking, preferably takes place by means of electromagnetic radiation, for example by means of UV rays, electron beams, X-rays or gamma rays, preferably by means of UV or electron beam radiation.

Application of the coating is preferably carried out by means of a wet-chemical coating process. Such a process can be a conventional wet coating process, such as, for example, spraying, casting, knife-coating, printing or roller coating.

The coating compositions described hereinbefore for the coated film according to the invention are used for this purpose. They can contain solvents in addition to the mentioned components of the nanoparticles, radiation-curable polymers or monomers and photoinitiators. Suitable solvents are, for example, organic solvents, optionally in admixture with water. Suitable organic solvents can be selected, for example, from the group containing aromatic solvents, such as, for example, xylene or toluene, ketones, such as, for example, acetone, 2-butanone, methyl isobutyl ketone, diacetone alcohol, alcohols, such as, for example, methanol, ethanol, isopropanol, 2-methoxypropyl alcohol, ethers, such as, for example, 1,4-dioxane, ethylene glycol n-propyl ether, or esters, such as, for example, ethyl acetate, butyl acetate, 1-methoxy-2-propyl acetate, or mixtures containing these solvents. Isopropanol (isopropyl alcohol), ethyl acetate, butyl acetate, 1-methoxy-2-propanol, xylene or toluene are particularly preferred. However, as an alternative coating compositions not comprising such solvent can be used.

Such coated films obtained with the process according to the invention show outstanding optical properties, such as high total transmittance, low transmission haze, excellent clarity and low optical retardation.

The present invention therefore further provides coated films obtained according to the process according to the present invention.

Owing to their optical quality, the coated films according to the invention are outstandingly suitable for use in opto-electronic devices, e.g. displays, touch panels and other opto-electronic devices.

The present invention therefore further provides the use of the coated film according to the invention in opto-electronic devices, in particular in displays or touch panels.

The present invention additionally provides an opto-electronic device, in particular a display or touch panel, containing at least one coated film according to the invention.

In such opto-electronic devices, e.g. displays or touch panels, the coated films according to the invention for example can be used as
- substrate film to replace glass for backplane for LCD, OLED, EPD and/or to replace glass for color filters, or
- base film for transparent electrode films, such as ITO films, or
- base film for any barrier film, which is protecting sensitive material from moisture and/or oxygen, or
- films that act as mechanical support for polarizer layers and therefore as replacement for TAC or COP films or other low retardation films.

Additionally, the coated films according to the invention are suitable to be used as substrates for barrier films, in particular films having a low oxygen and/or water vapour transmission rate.

The examples which follow serve to explain the invention by way of example, but without limiting it.

### Examples

### Measuring methods:

The dry coating thickness has been measured with a byco-test MP0R of BYK Additives & Instruments according to ASTM D 1400.

The surface roughness - measured as Ra value (average roughness) - of the coating as well as the smooth and matt side of the basic film have been measured according to DIN EN ISO 4287 with a Contour GT-KO optical surface-profiler.

The refractive indices have been measured with a Metricon 2010/M Prism Coupler. After measuring of the refractive index for the basic film material and for the coating the difference of these two refractive indices has been calculated.

The clarity (which is the see-trough quality), total transmittance and transmission haze have been measured with a BYK Haze-gard plus of BYK Additives & Instruments. With such BYK Haze-gard plus total transmittance and transmission haze are measured according to ASTM D 1003. Total transmittance according to the present invention shall be the total transmittance for light of wavelength from 380 nm to 800 nm.

The optical retardation has been measured with a polarimeter Ilis StrainMatic^{®} of Ilis GmbH according to ASTM D4093-95. The optical retardation is a measure of the stress birefringence of the film.

| | |
|---|---|
| Basic film: | Makrofol^{®} DP 1202 1-M (available from Bayer Material Science AG), polycarbonate film having a film thickness of 100 µm, one matt surface with a Ra value for surface roughness of 450 to 500 nm and one smooth (glossy) surface having a Ra value for surface roughness of less than 20 nm, the polycarbonate used is APEC^{®} 9379 (Bayer MaterialScience AG), which is a copolycarbonate comprising residues from 60 mol-% of 2,2-bis-(4-hydroxyphenyl)-propane and 40 mol-% of 1,1-bis-(4-hydroxyphenyl)-3,3,5-trimethyl-cyclohexane as dihydroxyaryl compounds |
| Desmolux^{®} U680H: | Unsaturated aliphatic urethane acrylate (Bayer MaterialScience AG) |
| Irgacure^{®} 184: | 1-Hydroxy-cyclohexyl-phenyl-ketone (photoinitiator by BASF) |
| Additol^{®} VXL 4930: | solution of a modified silicone (surface conditioner by Cytec Industries) |
| BYK^{®} 306: | solution of a polyether modified polydimethylsiloxane (surface conditioner by BYK additives & instruments) |
| Tego^{®} Glide100: | polyether siloxane copolymer (flow and glide additive by Evonik Tego Chemie GmbH) |

### Manufacture of extruded basic films:

A melt of the copolycarbonate is extruded trough a broad sheeting die at a melting temperature of 345°C and pressure in the extruder of 96 bar and calendered in a rolling mill consisting of a high gloss steel roller and an elastic rubber roller. A film of 100 µm thickness having a smooth, glossy side with a surface roughness (Ra) of less than 20 nm and a matt side with a surface roughness (Ra) of 450 to 500 nm is obtained by this procedure. An optical retardation of less than 30 nm has been measured for this film.

### Example 1:

A basic film has been coated with a coating composition of the coating formulation according to tab. 1.

**Tab. 1**

| **Substance** | **Mass (g)** |
|---|---|
| Pentaerythritol Triacrylate | 80 |
| 1,6-hexanediol diacrylate | 20 |
| Irgacure^{®} 184 | 3 |
| BYK^{®} 306 | 0.2 |
| Isopropyl alcohol | 105 |
| Ethyl acetate | 45 |

By manual hand drawdown by using a bar coater the coating formulation has been coated on the basic film at ambient temperature and has been thermally dried at 80°C for 10 min. The coating was applied at a wet film thickness of 15 to 20 µm. Afterwards the coating has been cured under ambient conditions by using a UV dosage of 2400 mJ/cm².

### Example 2:

A film obtained from example A have been coated with a coating composition of the coating formulation according to tab. 2.

**Tab.2**

| **Substance** | **Mass (g)** |
|---|---|
| Pentaerythritol Triacrylate | 787 |
| 1,6-hexanediol diacrylate | 197 |
| Irgacure^{®} 184 | 49 |
| Tego^{®} Glide100 | 6.9 |
| 1-methoxy-2-propanol | 1136 |
| Doped tin oxide sol (solid content of nanoparticles: 30%, solvent: isopropyl alcohol; acquired form Nissan Chemical Industries Ltd) | 1824 |

In a roll-to-roll coater the coating formulation has been coated on the basic film at a web temperature of 70°C and a web speed of 3 m/min. The coating was applied at a wet film thickness of 15 to 20 µm. The coating was then UV cured under nitrogen gas with a UV dosage of 550 mJ/cm².

### Example 3:

A film obtained from example A have been coated with a coating composition of the coating formulation according to tab. 3.

**Tab. 3**

| **Substance** | **Mass (g)** |
|---|---|
| Desmolux^{®} U680H | 7.44 |
| 1,6-hexanediol diacrylate | 4.96 |
| Irgacure^{®} 184 | 0.372 |
| Additol^{®} VXL 4930 | 0.025 |
| 1-methoxy-2-propanol | 16.84 |
| Zirconium oxide sol (solid content of nanoparticles: 20%, solvents: 1-methoxy-2-propanol, 1-methoxy-1-propyl acetate; acquired form JGC Catalysts and Chemicals Ltd) | 20.36 |

By manual hand drawdown by using a bar coater the coating formulation has been coated on the basic film at ambient temperature and has been thermally dried at 80°C for 10 min. The coating was applied at a wet film thickness of 35 to 40 µm. Afterwards the coating has been cured under ambient conditions by using a UV dosage of 2400 mJ/cm².

### Example 4:

A film obtained from example A have been coated with a coating composition of the coating formulation according to tab. 4.

**Tab. 4**

| **Substance** | **Mass (g)** |
|---|---|
| Desmolux^{®} U680H | 70 |
| Pentaerythritol Triacrylate | 30 |
| Irgacure^{®} 184 | 3 |
| BYK^{®} 306 | 0.2 |
| Ethyl acetate | 45 |
| Isopropyl alcohol | 105 |

By manual hand drawdown by using a bar coater the coating formulation has been coated on the basic film at ambient temperature and has been thermally dried at 80°C for 10 min. The coating was applied at a wet film thickness of 15 to 20 µm. Afterwards the coating has been cured under ambient conditions by using a UV dosage of 2400 mJ/cm².

### Example 5:

The thickness of the dried and cured coatings, the average surface roughness of the coating, the refractive index difference at 550 nm between the coating and the basic film substrate, clarity, total transmittance, transmission haze and optical retardation of the coated films obtained from examples 1 - 4 have been measured. The results are shown in tab. 5.

**Tab. 5**

| Example | Coating thickness (µm) | Average Coating surface roughness Ra (nm) | Refractive index (at 550nm) difference between coating and basic film substrate | Clarity (%) | Total transmittance (%) | Transmission haze (%) | Optical retardation (nm) |
|---|---|---|---|---|---|---|---|
| basic film | - | - | - | 27.8 | 92.0 | 34.1 | < 30 |
| 1 | 7~8 | <20 | 0.040 | 96.8 | 92.8 | 0.3 | < 30 |
| 2 | 7~8 | <20 | 0.01 | 99.6 | 91.6 | 0.4 | < 30 |
| 3 | 7~8 | <20 | < 0.01 | 99.6 | 91.6 | 0.4 | < 30 |
| 4 | 7~8 | <20 | 0.046 | 95.4 | 92.9 | 0.3 | < 30 |

According to the results in Tab. 5, the uncoated basic film has a low clarity of 27.8% and a high transmission haze of 34.1%. Although such film has an excellent optical retardation and total transmission it cannot be used in LCD-Display or touch panel applications, because of the insufficient results for clarity and transmission haze.

The results for examples 1 - 4 show that with coating the matte side of this basic film according to the invention, the clarity (clarity > 95%) as well as the transmission haze (< 1%) were improved significantly. The resulting coated films according to the invention have excellent optical retardation, total transmittance, transmission haze and clarity and are well suited for use e.g. in LCD-Display or touch panel applications.

Additionally, at the same coating surface roughness (Ra < 20nm), the coated films of examples 2 and 3 with the refractive index-matched coating surprisingly gives a higher clarity compared to the coated film of examples 1 and 4 with the non index-matched coating, so that by using refractive index-matched coatings can additionally improve the properties of the films according to the invention and their use in LCD-Display or touch panel applications.

## Claims

1. Coated film comprising a base film containing at least one layer comprising at least one poly- or copolycarbonate, **characterised in that** the base film has
- an optical retardation of less than 100 nm and
- a matt side having a surface roughness of from 200 nm to 20 µm and
- the other side having a surface roughness of less than 200 nm and
- a coating on the matt side whereby the surface of said coating has a surface roughness of less than 200 nm.

2. Coated film according to claim 1, **characterised in that** the coating contains nanoparticles.

3. Coated film according to claim 1 or 2, **characterised in that** the difference of the refractive indices of the base film and the coating at a wavelength of 550 nm is less than 0.04, preferably by 0.02, more preferably by 0.015.

4. Coated film according to at least one of claims 1 to 3, **characterised in that** the base film has an optical retardation of less than 50 nm, preferably of less than 10 nm.

5. Coated film according to at least one of claims 1 to 4, **characterised in that** the poly- or copolycarbonate in the base film has a glass transition temperature T_{g} of equal to or more than 140°C, preferably of more than 175°C.

6. Coated film according to at least one of claims 1 to 5, **characterised in that** the poly- or copolycarbonate containing units prepared from dihydroxydiphenylcycloalkanes of formula (Ia) as dihydroxyaryl compounds contains 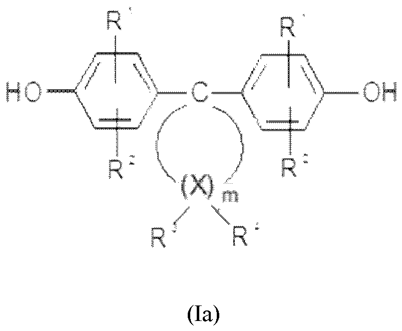 wherein
R¹ and R² independently of one another represent hydrogen, halogen, preferably chlorine or bromine, C₁-C₈-alkyl, C₅-C₆-cycloalkyl, C₆-C₁₀-aryl, preferably phenyl, and C₇-C₁₂-aralkyl, preferably phenyl-C₁-C₄-alkyl, preferably benzyl,
m represents an integer from 4 to 7, preferably 4 or 5,
R³ and R⁴, which can be chosen individually for each X, independently of one another represent hydrogen or C₁-C₆-alkyl and
X represents carbon,
with the proviso that, on at least one atom X, preferably on one or two atom(s) X, in particular on only one atom X, R³ and R⁴ simultaneously represent alkyl.

7. Coated film according to claim 6, **characterised in that** the units prepared from dihydroxydiphenylcycloalkanes of formula (Ia) are units prepared from dihydroxydiphenylcycloalkanes of formula (Ia-1) to (Ia-3) 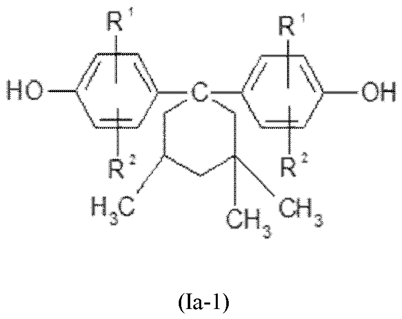 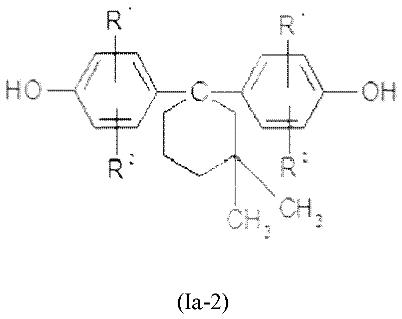 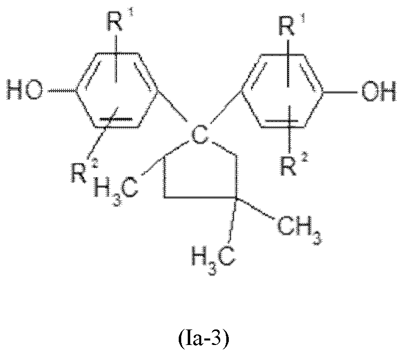
wherein R¹ and R² independently of one another represent hydrogen, halogen, preferably chlorine or bromine, C₁-C₈-alkyl, C₅-C₆-cycloalkyl, C₆-C₁₀-aryl, preferably phenyl, and C₇-C₁₂-aralkyl, preferably phenyl-C₁-C₄-alkyl, in particular benzyl, particularly preferably hydrogen.

8. Coated film according to claim 6 or 7, **characterised in that** the poly- or copoly-carbonate containing units prepared from dihydroxydiphenylcycloalkanes of formula (Ia) is a poly- or copoly-carbonate containing units prepared from 1,1-bis-(4-hydroxyphenyl)-3,3,5-trimethylcyclohexane, preferably a copolycarbonate containing units prepared from 1,1-bis-(4-hydroxyphenyl)-3,3,5-trimethyl-cyclohexane as dihydroxydiphenylcycloalkanes of formula (Ia) and 2,2-bis-(4-hydroxyphenyl)-propane as a further dihydroxyaryl compound.

9. Coated film according to at least one of claims 1 to 8, **characterised in that** the coating is a coating produced from a radiation-curable coating composition containing nanoparticles, preferably from an acrylate-based radiation-curable coating composition containing nanoparticles.

10. Process for the production of a coated film according to at least one of claims 1 to 9, **characterised in that**
- a base film having at least one layer containing at least one poly- or copoly-carbonate, the base film having an optical retardation of less than 100 nm, a matt side having a surface roughness of from 200 nm to 20 µm and another side having a surface roughness of less than 200 nm is produced by means of extrusion or co-extrusion by extruding or co-extruding the plastics melt and then calendering it between two rollers, of which one roller has a steel surface and the other roller has an elastic surface,
- the base film so produced is then coated on the matt side with a coating composition and the coating having a roughness of less than 200 nm after drying and optional additional curing.

11. Process according to claim 10, **characterised in that** coating is carried out using a radiation-curable coating composition containing nanoparticles, preferably a radiation-curable coating composition containing one or more acrylates, wherein curing by means of radiation is further carried out after application of the coating composition and drying.

12. Process according to claim 10 or 11, **characterised in that** the roller having an elastic surface is a roller having a rubber surface.

13. Use of a coated film according to at least one of claims 1 to 9 in opto-electronic devices.

14. Use of a coated film according to at least one of claims 1 to 9 in displays or touch panels.

15. Opto-electronic device, preferably display or touch panel, containing at least one coated film according to at least one of claims 1 to 9.
